# EUROPEAN PATENT APPLICATION

(11) **EP 4 503 655 A1**
(43) Date of publication of application: **05.02.2025**
(21) Application number: 23778091.1
(22) Date of filing: 27.03.2023
(51) Int. Cl.: H04W 4/02

(54) **POSITIONING PROCESSING METHOD AND APPARATUS, AND TERMINAL AND NETWORK SIDE DEVICE**

(30) Priority: 28.03.2022 CN 202210316668
(71) Applicant: Vivo Mobile Communication Co., Ltd., Dongguan, Guangdong 523863 (CN)
(72) Inventor: WANG, Wen, Dongguan, Guangdong 523863 (CN); XIE, Zhenhua, Dongguan, Guangdong 523863 (CN); ZHANG, Yizhong, Dongguan, Guangdong 523863 (CN)
(74) Representative: Lavoix
(86) International application number: PCT/CN2023/084045
(87) International publication number: WO 2023/185724

(57) **Abstract**

This application relates to the field of communication technologies, and discloses a positioning processing method and apparatus, a terminal, and a network side device. The method in embodiments of this application includes: A first terminal sends a first request message to a first network side device. The first terminal receives a first response message sent by the first network side device. The first response message corresponds to the first request message. The first request message is used to request at least one of the following: an absolute location of a second terminal, the second terminal being a positioning assistance device of the first terminal; and a location of the first terminal.

## Description

### CROSS-REFERENCE TO RELATED APPLICATIONS

This application claims the priority of Chinese Patent Application No. 202210316668.1 filed in China on March 28, 2022, which is incorporated herein by reference in its entirety.

### TECHNICAL FIELD

This application relates to the field of communications technologies, and specifically, to a positioning processing method and apparatus, a terminal, and a network side device.

### BACKGROUND

Considering that a terminal may not be able to perform positioning on a Uu air interface due to being in a network coverage scene out of network coverage or a poor network signal, an absolute location of the terminal cannot be obtained. Therefore, how the terminal implements positioning becomes an urgent problem to be resolved.

### SUMMARY

Embodiments of this application provide a positioning processing method and apparatus, a terminal, and a network side device, to resolve a problem of positioning in a case that a terminal is out of network coverage or has a weak network signal.

According to a first aspect, a positioning processing method is provided. The method includes:
A first terminal sends a first request message to a first network side device.

The first terminal receives a first response message sent by the first network side device. The first response message corresponds to the first request message.

The first request message is used to request at least one of the following:
an absolute location of a second terminal, the second terminal being a positioning assistance device of the first terminal; and
a location of the first terminal.

According to a second aspect, a positioning processing apparatus is provided, including:
a first sending module, configured to send a first request message to a first network side device; and
a first receiving module, configured to receive a first response message sent by the first network side device, the first response message corresponding to the first request message, where
the first request message is used to request at least one of the following:
   an absolute location of a second terminal, the second terminal being a positioning assistance device of the first terminal; and
   a location of the first terminal.

According to a third aspect, a positioning processing method is provided. The method includes:
A first network side device receives a first request message sent by a first terminal.

The first network side device sends a first response message to the first terminal. The first response message corresponds to the first request message.

The first request message is used to request at least one of the following:
an absolute location of a second terminal, the second terminal being a positioning assistance device of the first terminal; and
a location of the first terminal.

According to a fourth aspect, a positioning processing apparatus is provided, including:
a second receiving module, configured to receive a first request message sent by a first terminal; and
a second sending module, configured to send a first response message to the first terminal, the first response message corresponding to the first request message, where
the first request message is used to request at least one of the following:
   an absolute location of a second terminal, the second terminal being a positioning assistance device of the first terminal; and
   a location of the first terminal.

According to a fifth aspect, a positioning processing method is provided, including:
A second network side device receives a second request message sent by a first network side device.

The second network side device sends a second response message to the first network side device.

The second network side device supports calculation of a location of a first terminal.

The second request message is used to request at least one of the following:
an absolute location of a second terminal, the second terminal being a positioning assistance device of the first terminal; and
the location of the first terminal.

According to a sixth aspect, a positioning processing apparatus is provided, including:
a fourth receiving module, configured to receive a second request message sent by a first network side device; and
a fourth sending module, configured to send a second response message to the first network side device, where
the second network side device supports calculation of a location of a first terminal; and
the second request message is used to request at least one of the following:
   an absolute location of a second terminal, the second terminal being a positioning assistance device of the first terminal; and
   the location of the first terminal.

According to a seventh aspect, a terminal is provided. The terminal includes a processor and a memory. The memory stores a program or an instruction executable in the processor. The program or the instruction, when executed by the processor, implements the steps of the method described in the first aspect.

According to an eighth aspect, a terminal is provided, including a processor and a communication interface. The communication interface is configured to: send a first request message to a first network side device; receive a first response message sent by the first network side device, the first response message corresponding to the first request message, where
the first request message is used to request at least one of the following:
an absolute location of a second terminal, the second terminal being a positioning assistance device of the first terminal; and
a location of the first terminal.

According to a ninth aspect, a network side device is provided. The network side device includes a processor and a memory. The memory stores a program or an instruction executable in the processor. The program or the instruction, when executed by the processor, implements the steps of the method described in the third aspect.

According to a tenth aspect, a network side device is provided, including a processor and a communication interface. The communication interface is configured to: receive a first request message sent by a first terminal; and send a first response message to the first terminal, the first response message corresponding to the first request message, where
the first request message is used to request at least one of the following:
an absolute location of a second terminal, the second terminal being a positioning assistance device of the first terminal; and
a location of the first terminal.

According to an eleventh aspect, a network side device is provided. The network side device includes a processor and a memory. The memory stores a program or an instruction executable in the processor. The program or the instruction, when executed by the processor, implements the steps of the method described in the fifth aspect.

According to a twelfth aspect, a network side device is provided, including a processor and a communication interface. The communication interface is configured to: receive a second request message sent by a first network side device; and send a second response message to the first network side device, where
the second network side device supports calculation of a location of a first terminal; and
the second request message is used to request at least one of the following:
   an absolute location of a second terminal, the second terminal being a positioning assistance device of the first terminal; and
   the location of the first terminal.

According to a thirteenth aspect, a positioning processing system is provided, including: a terminal and a network side device. The terminal may be configured to perform the steps of the positioning processing method described in the first aspect. The network side device may be configured to perform the steps of the positioning processing method described in the third aspect or the fifth aspect.

According to a fourteenth aspect, a readable storage medium is provided. The readable storage medium stores a program or an instruction. The program or the instruction, when executed by a processor, implements the steps of the method described in the first aspect, or implements the steps of the method described in the third aspect, or implements the steps of the method described in the fifth aspect.

According to a fifteenth aspect, a chip is provided. The chip includes a processor and a communication interface. The communication interface is coupled to the processor. The processor is configured to run a program or an instruction to implement the method described in the first aspect, or implement the method described in the third aspect, or implement the method described in the fifth aspect.

According to a sixteenth aspect, a computer program/program product is provided. The computer program/program product is stored in a storage medium. The computer program/program product is executed by at least one processor to implement the steps of the positioning processing method described in the first aspect, or implement the steps of the positioning processing method described in the third aspect, or implement the steps of the positioning processing method described in the fifth aspect.

In embodiments of this application, the first terminal sends the first request message to the first network side device, and receives the first response message corresponding to the first request message sent by the first network side device, and the first request message is used to request at least one of the following: the absolute location of the second terminal and the location of the first terminal. In this way, through assistance of the second terminal, the first terminal can learn at least one of the absolute location of the second terminal and the location of the first terminal, to complete positioning.

### BRIEF DESCRIPTION OF THE DRAWINGS

FIG. 1 is a block diagram of a wireless communication system.
FIG. 2 is a schematic flowchart I of a positioning processing method according to an embodiment of this application.
FIG. 3 is a schematic diagram I of application of an embodiment of this application.
FIG. 4 is a schematic diagram II of application of an embodiment of this application.
FIG. 5 is a schematic diagram III of application of an embodiment of this application.
FIG. 6 is a schematic diagram IV of application of an embodiment of this application.
FIG. 7 is a schematic diagram I of modules of a positioning processing apparatus according to an embodiment of this application.
FIG. 8 is a schematic flowchart II of a positioning processing method according to an embodiment of this application.
FIG. 9 is a schematic diagram II of modules of a positioning processing apparatus according to an embodiment of this application.
FIG. 10 is a schematic flowchart III of a positioning processing method according to an embodiment of this application.
FIG. 11 is a schematic diagram III of modules of a positioning processing apparatus according to an embodiment of this application.
FIG. 12 is a schematic structural diagram of a communication device according to an embodiment of this application.
FIG. 13 is a schematic structural diagram of a terminal according to an embodiment of this application.
FIG. 14 is a schematic structural diagram of a network side device according to an embodiment of this application.

### DETAILED DESCRIPTION

Technical solutions in embodiments of this application are clearly described below with reference to the accompanying drawings in embodiments of this application. Apparently, the described embodiments are merely some rather than all of embodiments of this application. All other embodiments obtained by a person of ordinary skill in the art based on embodiments of this application fall within the protection scope of this application.

Terms "first", "second", and the like in the specification and the claims of this application are used to distinguish between similar objects, and are not used to describe a specific order or sequence. It should be understood that the terms used in this way may be transposed where appropriate, so that embodiments of this application can be implemented in a sequence other than those illustrated or described herein. In addition, objects defined by "first" and "second" are generally of the same class and do not limit a quantity of objects. For example, one or more first objects may be arranged. In addition, "and/or" in the specification and the claims indicates at least one of connected objects, and a character "/" generally indicates an "or" relationship between associated objects.

It should be noted that, technologies described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application are usually interchangeably used, and the described technology may be used for both the system and the radio technology mentioned above, or may be used for another system and another radio technology. A new radio (New Radio, NR) system is described below for an illustrative purpose, and the term NR is used in most of the following descriptions, but the technologies may also be applied to applications other than applications of the NR system, such as a 6^{th} Generation (6^{th} Generation, 6G) communication system.

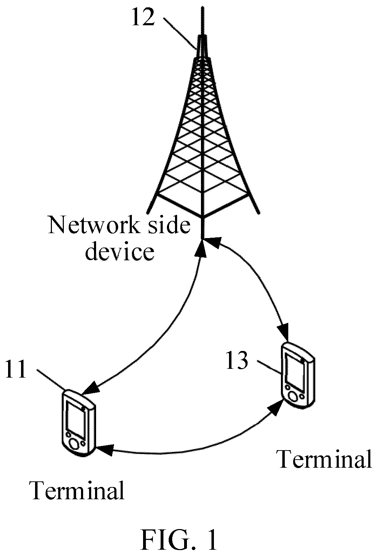

FIG. 1 is a block diagram of a wireless communication system to which embodiments of this application may be applied. The wireless communication system includes a terminal 11, a terminal 13, and a network side device 12. The terminal 11 and the terminal 13 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), an augmented reality (augmented reality, AR)/virtual reality (virtual reality, VR) device, a robot, a wearable device (Wearable Device), an on-board device (Vehicle User Equipment, VUE), a pedestrian user equipment (Pedestrian User Equipment, PUE), smart home (a home device with a wireless communication capability, such as a refrigerator, a television, a washing machine, or furniture), a game console, a personal computer (personal computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. It should be noted that, specific types of the terminal 11 and the terminal 13 are not limited in embodiments of this application. The network side device 12 may include an access network device or a core network device. The access network device may also be referred to as a wireless access network device, a radio access network (Radio Access Network, RAN), a wireless access network function, or a wireless access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a household NodeB, a household evolved NodeB, a transmitting receiving point (Transmitting Receiving Point, TRP), or another appropriate term in the field, as long as the same technical effect is achieved. The base station is not limited to a specific technical term. It should be noted that, in embodiments of this application, only a base station in the NR system is used as an example, but a specific type of the base station is not limited.

It should be learned that in the embodiment, if the terminal 11 is out of coverage of the network side device 12, the terminal 11 may complete positioning through the terminal 13.

A positioning processing method provided in embodiments of this application is described in detail below through some embodiments and application scenarios with reference to the accompanying drawings.

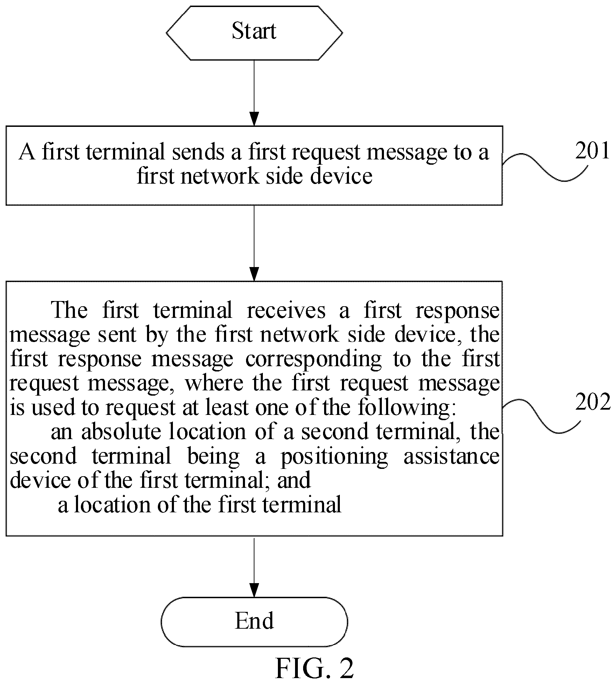

As shown in FIG. 2, a positioning processing method in this embodiment of this application includes the following steps:

Step 201: A first terminal sends a first request message to a first network side device.

Step 202: The first terminal receives a first response message sent by the first network side device, where the first response message corresponds to the first request message.

The first request message is used to request at least one of the following:
an absolute location of a second terminal, the second terminal being a positioning assistance device of the first terminal; and
a location of the first terminal.

Based on step 201 and step 202, the first terminal sends the first request message to the first network side device, and receives the first response message corresponding to the first request message sent by the first network side device, and the first request message is used to request at least one of the following: the absolute location of the second terminal and the location of the first terminal. In this way, the first terminal can learn at least one of the absolute location of the second terminal and the location of the first terminal, to complete positioning.

The absolute location of the second terminal is a measurement of a Uu of the second terminal. The location of the first terminal is obtained based on the absolute location of the second terminal.

For example, the method of this embodiment of this application is applied to a scene in which the first terminal communicates with the first network side device through a relay of the second terminal. The second terminal is a layer 2 (L2) terminal, and the first terminal transparently transmits the first request message to the first network side device through the second terminal. However, the first network side device returns the first response message based on the first request message, to inform the first terminal of the absolute location of the second terminal and/or the location of the first terminal, and complete a positioning requirement of the first terminal.

Optionally, the first request message includes at least one of the following:
an identifier of the first terminal;
an identifier of the second terminal;
a first sidelink measurement, where the first sidelink measurement is used to indicate a measurement between the first terminal and the second terminal;
a request type;
a first request indication; and
a measurement accuracy requirement.

The first sidelink measurement may be a measurement obtained by the first terminal through measurement of a sidelink between the first terminal and the second terminal, or may be a measurement obtained by the second terminal through measurement of the sidelink between the first terminal and the second terminal and sent by the second terminal to the first terminal through interaction. Specifically, the first sidelink measurement is obtained based on a measurement reference signal transmitted by the first terminal or the second terminal based on sidelink measurement information. The sidelink measurement information is measurement configuration information, including features of the measurement reference signal, such as an identifier, power, and a period of the measurement reference signal. It should be noted that, to improve measurement accuracy, a plurality of identifiers of the second terminal may be arranged. A network side may perform positioning of the first terminal a plurality of times based on a plurality of second terminals.

Optionally, the request type includes at least one of the following:
a short time request; and
a long time request.

The short time request, that is, an immediate request, indicates that the second terminal requests to obtain a message requested by the second request message within a relatively short first duration. For example, the second terminal requests to immediately obtain the message requested by the second request message.

The long time request, that is, a delayed request, indicates that the second terminal requests to obtain a message requested by the second request message within a relatively long second duration or when an event is triggered. For example, the second terminal requests to periodically obtain the message requested by the second request message when the second terminal enters a specified region.

Optionally, the first request indication includes at least one of the following:
a first indication, used to indicate that the absolute location of the second terminal is to be obtained; and
a second indication, used to indicate that the location of the first terminal is to be obtained.

The first request indication indicates content of the first response message required by the first terminal. That is, if the first request indication includes the first indication, the first response message needs to include the absolute location of the second terminal; and if the first request indication includes the second indication, the first response message needs to include the location of the first terminal.

Moreover, if the first request message includes the first sidelink measurement, based on an effect of the first sidelink measurement, the first sidelink measurement may also implicitly indicate that the first response message needs to include the location of the first terminal.

Optionally, the first response message includes at least one of the following:
the absolute location of the second terminal; and
the location of the first terminal.

In other words, the first response message corresponds to the message that the first request message is used to request, including the absolute location of the second terminal and/or the location of the first terminal.

Optionally, in the embodiment, the absolute location of the second terminal and/or the location of the first terminal is obtained and sent to the first terminal by the first network side device in a case that it is determined that the first terminal is allowed to obtain the absolute location of the second terminal.

That is, after receiving the first request message, the first network side device further obtains the absolute location of the second terminal and/or the location of the first terminal in a case that it is determined that the first terminal is allowed to obtain the absolute location of the second terminal, and then sends the absolute location of the second terminal and/or the location of the first terminal to the first terminal through the first response message.

The first network side device performs authentication on the first terminal to determine whether the first terminal is allowed to obtain the absolute location of the second terminal. For example, the first network side device includes an access and mobility management function (Access and Mobility Management Function, AMF) and a gateway mobile location center (Gateway Mobile Location Center, GMLC). The AMF sends authentication information to the GMLC (that is, whether the first terminal is allowed to obtain authentication information of the absolute location of the second terminal). The GMLC receives the authentication information and obtains at least one of the following from a unified data management (unified data management, UDM) function or a unified data repository (Unified Data Repository, UDR): a privacy file of the first terminal, a privacy file of the second terminal, whether the first terminal is allowed to obtain a privacy file of the absolute location of the second terminal, and whether the first terminal is allowed to obtain a result of the absolute location of the second terminal, to determine whether the first terminal is allowed to obtain the absolute location of the second terminal, and generate and send an authentication result the result to the AMF. Alternatively, the AMF sends the authentication information to the second terminal, and the second terminal feeds back the authentication result to the AMF.

Optionally, the location of the first terminal is determined by a second network side device based on the absolute location of the second terminal and the first sidelink measurement. The second network side device supports calculation of the location of the first terminal.

In other words, the first network side device obtains the location of the first terminal and/or the absolute location of the second terminal through the second network side device in a case that the authentication succeeds (the first terminal is allowed to obtain the absolute location of the second terminal). For example, if the AMF of the first network side device selects an LMF of the second network side device, the selected LMF determines the location of the first terminal and/or the absolute location of the second terminal.

In addition, the first network side device sends a third response message to the first terminal in a case that the first terminal is not allowed to obtain the absolute location of the second terminal, where the third response message is used to indicate that the first request message is to be rejected.

Optionally, the first network side device sends the second request message to the second network side device. The second request message is used to request the absolute location of the second terminal and/or the location of the first terminal.

Optionally, the second request message includes at least one of the following:
an identifier of the first terminal;
an identifier of the second terminal;
a first sidelink measurement, where the first sidelink measurement is used to indicate a measurement between the first terminal and the second terminal;
a request type; and
a second request indication.

Herein, similar to the first request message, a request type of the second request message further includes at least one of the short time request and the long time request. Details are not described herein. The second request indication indicates content of the second response message required by the first network side device, including the first indication and/or the second indication. That is, if the second request indication includes the first indication, the second response message needs to include the absolute location of the second terminal; and if the second request indication includes the second indication, the second response message needs to include the location of the first terminal.

Optionally, the second response message includes at least one of the following:
the absolute location of the second terminal; and
the location of the first terminal.

The absolute location of the second terminal is obtained by the second network side device by performing positioning on the second terminal after receiving the second request message. The location of the first terminal is determined by the second network side device based on the first sidelink measurement and the absolute location of the second terminal obtained by performing positioning on the second terminal after receiving the second request message including the first sidelink measurement.

Optionally, after the receiving, by the first terminal, a first response message sent by the first network side device, the method further includes:
determining, by the first terminal, the location of the first terminal based on the absolute location of the second terminal and the first sidelink measurement in a case that the first response message includes the absolute location of the second terminal.

That is, the first terminal may also determine the location of the first terminal based on the absolute location of the second terminal and the first sidelink measurement in a case that the absolute location of the second terminal is received.

Optionally, the first sidelink measurement includes at least one of the following:
an angle between the second terminal and the first terminal; and
a distance between the second terminal and the first terminal.

In other words, after the measurement reference signal is received based on the sidelink measurement information, the angle and the distance between the second terminal and the first terminal may be determined based on the measurement reference signal.

In an embodiment, in a case that a NAS connection exists between the first terminal and the AMF, conventional functions for a location-based service including an MT-LR and an MO-LR may be reused. The location-based service may be triggered by the AMF corresponding to the first terminal. In other words, a request corresponding to the location-based service may come from the first terminal, or may come from a 5G NF or an application server through a GMLC process. The first terminal may trigger the MO-LR, and the LMF may trigger the MT-LR. Correspondingly, endpoints of a positioning protocol LPP may be the first terminal and the LMF. A target UE or the LMF determines whether a network is applied to assist in sidelink positioning. When the LMF determines to use the network to assist in the sidelink positioning, the LMF may trigger the first terminal (a target terminal) to perform a discovery process on one or more second terminals (auxiliary terminals).

After the second terminal is found, the first terminal and at least one second terminal perform at least one of ranging and the sidelink positioning, and the first terminal reports an identifier of the foregoing at least one second terminal to the LMF. The LMF estimates the location of the first terminal by using the location of the foregoing at least one second terminal and measurement data or a measurement corresponding to at least one of the ranging and the sidelink positioning. The measurement data or the measurement corresponding to the foregoing at least one of the ranging and the sidelink positioning may be provided to the LMF by the first terminal, or may be provided to the LMF by the second terminal. The measurement data or the measurement corresponding to the at least one of the ranging and the sidelink positioning, and the location of the second terminal may be invoked at the same time, to improve positioning accuracy of the first terminal.

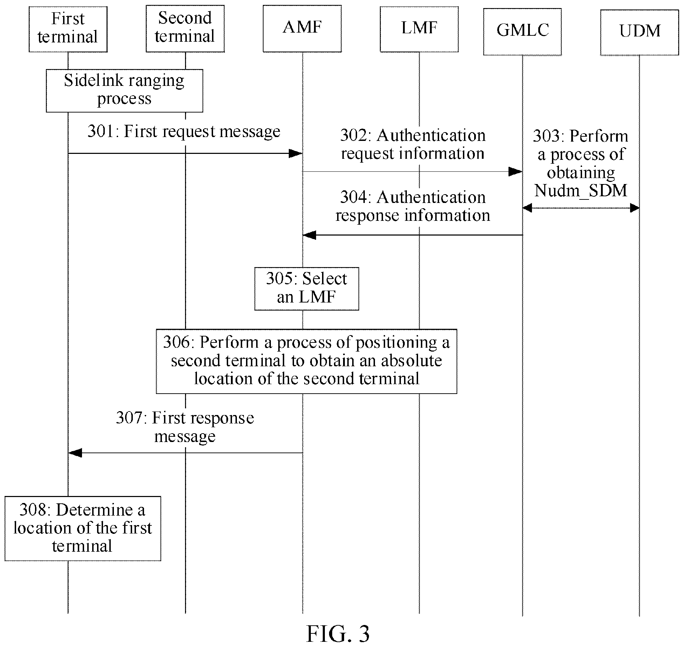

Application of the method of embodiments of this application is described below with reference to FIG. 3 to FIG. 6. A second terminal is selected by a first terminal based on positioning-related information of a candidate terminal. Details are not described herein again.

Scene I: As shown in FIG. 3, a process of determining a location of the first terminal is specifically described.

Step 301: The first terminal sends a first request message (such as an MO-LR request) to an AMF, where the MO-LR request carries an identifier of a second terminal.

Step 302: The AMF sends authentication information (an Ngmlc_Location_ProvideLocation request) to a GMLC after receiving the MO-LR request, where the Ngmle_Location_ProvideLocation request is used to determine whether the first terminal is allowed (authorized) to obtain an absolute location of the second terminal, and the Ngmlc_Location_ProvideLocation request includes an identifier of the first terminal and the identifier of the second terminal.

Step 303: The GMLC performs an Nudm_SDM get process with a UDM after the GMLC receives the Ngmlc_Location_ProvideLocation request, to obtain at least one of results including a privacy file of the first terminal, a privacy file of the second terminal, whether the first terminal is allowed to obtain a privacy file of the absolute location of the second terminal, and whether the first terminal is allowed to obtain the absolute location of the second terminal.

Step 304: The GMLC determines whether the first terminal is allowed to obtain the absolute location of the second terminal based on the at least one of the privacy file of the first terminal, the privacy file of the second terminal, whether the first terminal is allowed to obtain the privacy file of the absolute location of the second terminal, and whether the first terminal is allowed to obtain the result of the absolute location of the second terminal, and sends an Ngmlc_Location_ProvideLocation response to the AMF, where the Ngmlc_Location_ProvideLocation response carries a result of whether the first terminal is allowed to obtain the absolute location of the second terminal.

Step 305: After the AMF receives the Ngmlc _Location_ProvideLocation response from the GMLC, the AMF performs selection of the LMF if a result carried by the Ngmlc_Location_ProvideLocation response is that the first terminal is allowed to obtain the absolute location of the second terminal.

Step 306: The AMF performs a process of positioning the second terminal to obtain the absolute location of the second terminal. The process of positioning the second terminal includes that the AMF sends a second request message to the LMF, and the LMF obtains and sends the absolute location of the second terminal to the AMF through a second response message.

Step 307: The AMF sends a first response message (such as an MO-LR response) to the first terminal, where the MO-LR response carries the absolute location of the second terminal.

Step 308: The first terminal determines the location of the first terminal based on the absolute location of the second terminal and a first sidelink measurement. The first sidelink measurement may be obtained by the first terminal through a sidelink ranging process before step 301.

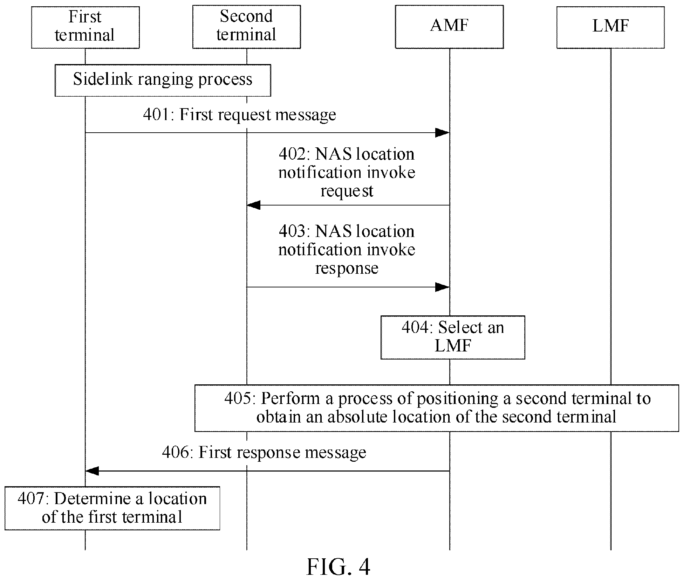

Scene II: As shown in FIG. 4, a process of determining a location of the first terminal is specifically described.

Step 401 is the same as step 301.

Step 402: The AMF sends authentication information (a NAS location notification invoke request) to the second terminal after receiving the MO-LR request, where the NAS location notification invoke request is used to determine whether the first terminal is allowed (authorized) to obtain an absolute location of the second terminal, and the NAS location notification invoke request includes an identifier of the first terminal.

Step 403: The second terminal sends a NAS location notification invoke response to the AMF after receiving the MO-LR request, and the NAS location notification invoke response carries a result of whether the first terminal is allowed to obtain the absolute location of the second terminal.

Step 404: After the AMF receives the NAS location notification invoke response, the AMF performs selection of the LMF if a result carried by the NAS location notification invoke response is that the first terminal is allowed to obtain the absolute location of the second terminal.

Steps 405-407 are the same as steps 306-308. Details are not described herein again.

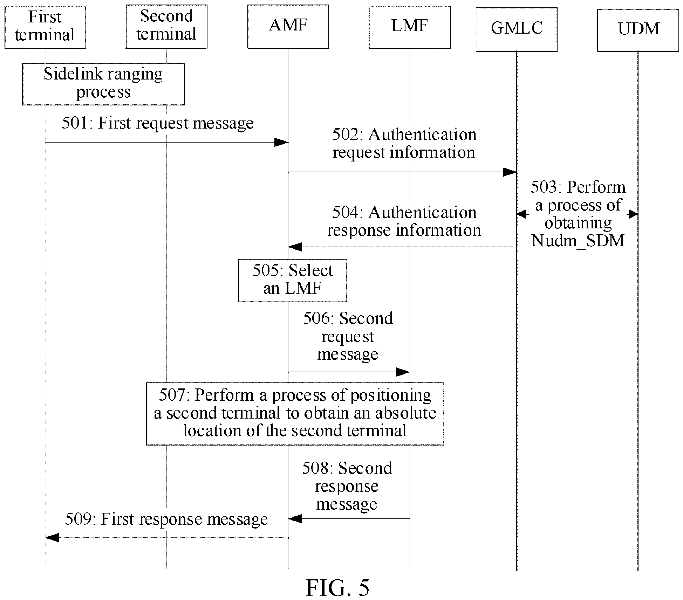

Scene III: As shown in FIG. 5, a process of determining a location of the first terminal is specifically described.

Step 501: The first terminal sends a first request message (such as an MO-LR request) to an AMF, where the MO-LR request carries an identifier of a second terminal and a first sidelink measurement.

Step 502 (optionally): The AMF sends authentication information (an Ngmlc_Location_ProvideLocationrequest) to a GMLC after receiving the MO-LR request, where the Ngmlc_Location_ProvideLocation request is used to determine whether the first terminal is allowed (authorized) to obtain an absolute location of the second terminal, and the Ngmlc_Location_ProvideLocation request includes an identifier of the first terminal and the identifier of the second terminal.

Step 503 (optionally): The GMLC performs an Nudm_SDM get process with a UDM after the GMLC receives the Ngmlc_Location_ProvideLocation request, to obtain at least one of results including a privacy file of the first terminal, a privacy file of the second terminal, whether the first terminal is allowed to obtain a privacy file of the absolute location of the second terminal, and whether the first terminal is allowed to obtain the absolute location of the second terminal.

Step 504 (optionally): The GMLC determines whether the first terminal is allowed to obtain the absolute location of the second terminal based on the at least one of the privacy file of the first terminal, the privacy file of the second terminal, whether the first terminal is allowed to obtain the privacy file of the absolute location of the second terminal, and whether the first terminal is allowed to obtain the result of the absolute location of the second terminal, and sends an Ngmlc_Location_ProvideLocation response to the AMF, where the Ngmlc_Location_ProvideLocation response carries a result of whether the first terminal is allowed to obtain the absolute location of the second terminal.

Step 505 (optionally): After the AMF receives the Ngmlc_Location_ProvideLocation response from the GMLC, the AMF performs selection of the LMF if a result carried by the Ngmlc_Location_ProvideLocation response is that the first terminal is allowed to obtain the absolute location of the second terminal. The AMF selects the LMF that can determine the location of the first terminal based on the first sidelink measurement and the absolute location of the second terminal.

Step 506: The AMF sends a second request message (such as an Nlmf_Location_DetermineLocation request) to the LMF selected in step 505, where the Nlmf_Location_DetermineLocation request carries the first sidelink measurement.

Step 507: The LMF performs a process of positioning the second terminal to obtain the absolute location of the second terminal.

Step 508: The LMF determines the location of the first terminal based on the absolute location of the second terminal and the first sidelink measurement. The first sidelink measurement may be obtained by the first terminal through a sidelink ranging process before step 501.

Step 509: The AMF sends a first response message (such as an MO-LR response) to the first terminal, where the MO-LR response carries the location of the first terminal.

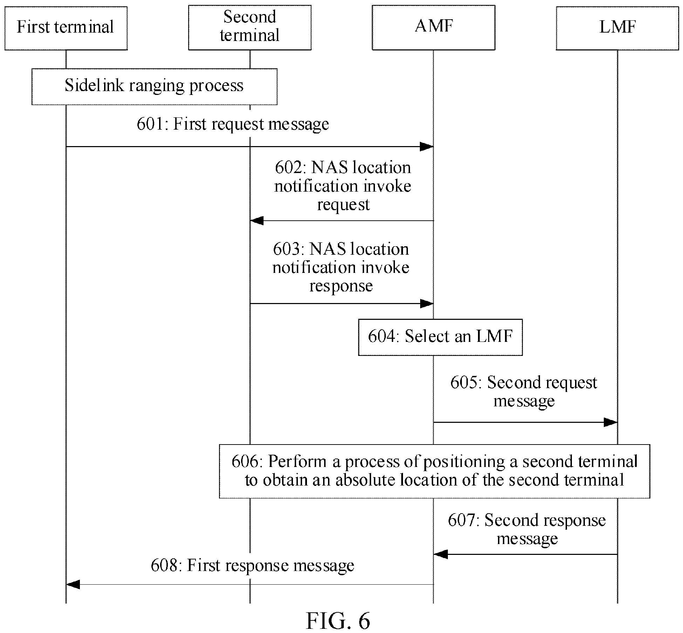

Scene IV: As shown in FIG. 6, a process of determining a location of the first terminal is specifically described.

Step 601 is the same as step 501.

Step 602: The AMF sends authentication information (a NAS location notification invoke request) to the second terminal after receiving the MO-LR request, where the NAS location notification invoke request is used to determine whether the first terminal is allowed (authorized) to obtain an absolute location of the second terminal, and the NAS location notification invoke request includes an identifier of the first terminal.

Step 603: The second terminal sends a NAS location notification invoke response to the AMF after receiving the MO-LR request, and the NAS location notification invoke response carries a result of whether the first terminal is allowed to obtain the absolute location of the second terminal.

Step 604: After the AMF receives the NAS location notification invoke response, the AMF performs selection of the LMF if a result carried by the NAS location notification invoke response is that the first terminal is allowed to obtain the absolute location of the second terminal. The AMF selects the LMF that can determine the location of the first terminal based on the first sidelink measurement and the absolute location of the second terminal.

Steps 605-608 are the same as steps 506-509. Details are not described herein again.

Based on the above, the first terminal sends the first request message to the first network side device, and receives the first response message corresponding to the first request message sent by the first network side device, and the first request message is used to request at least one of the following: the absolute location of the second terminal and the location of the first terminal. In this way, the first terminal can learn at least one of the absolute location of the second terminal and the location of the first terminal, to complete positioning.

The positioning processing method provided in embodiments of this application may be performed by a positioning processing apparatus. In embodiments of this application, the positioning processing apparatus provided in embodiments of this application is described by using an example in which the positioning processing apparatus performs the positioning processing method.

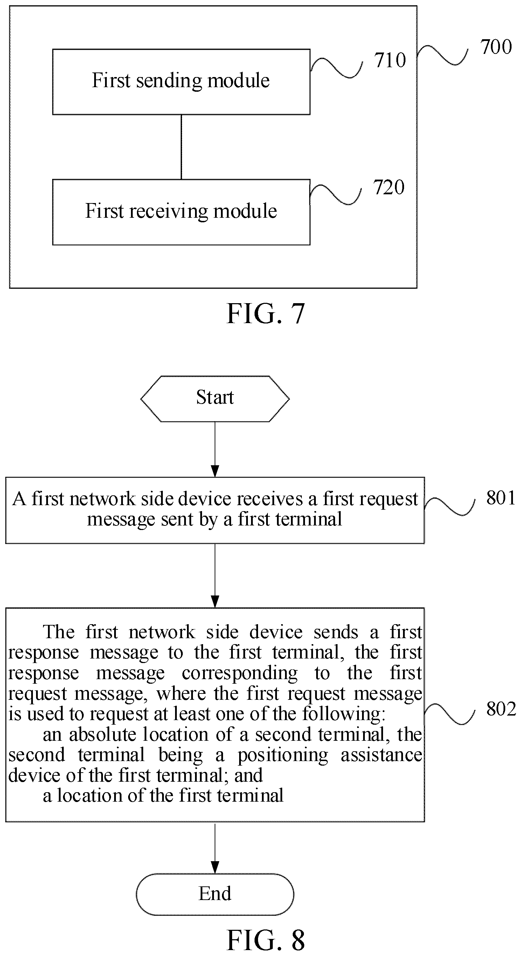

As shown in FIG. 7, a positioning processing apparatus 700 in this embodiment of this application includes:
a first sending module 710, configured to send a first request message to a first network side device; and
a first receiving module 720, configured to receive a first response message sent by the first network side device, the first response message corresponding to the first request message.

The first request message is used to request at least one of the following:
an absolute location of a second terminal, the second terminal being a positioning assistance device of the first terminal; and
a location of the first terminal.

Optionally, the first request message includes at least one of the following:
an identifier of the first terminal;
an identifier of the second terminal;
a first sidelink measurement, where the first sidelink measurement is used to indicate a measurement between the first terminal and the second terminal;
a request type;
a first request indication; and
a measurement accuracy requirement.

Optionally, the request type includes at least one of the following:
a short time request; and
a long time request.

Optionally, the first request indication includes at least one of the following:
a first indication, used to indicate that the absolute location of the second terminal is to be obtained; and
a second indication, used to indicate that the location of the first terminal is to be obtained.

Optionally, the first response message includes at least one of the following:
the absolute location of the second terminal; and
the location of the first terminal.

Optionally, the absolute location of the second terminal and/or the location of the first terminal is obtained and sent to the first terminal by the first network side device in a case that it is determined that the first terminal is allowed to obtain the absolute location of the second terminal.

Optionally, the location of the first terminal is determined by a second network side device based on the absolute location of the second terminal and the first sidelink measurement.

The absolute location of the second terminal is obtained by the second network side device by performing positioning on the second terminal.

The second network side device supports calculation of the location of the first terminal.

Optionally, the apparatus further includes:
a first processing module, configured to determine the location of the first terminal based on the absolute location of the second terminal and the first sidelink measurement in a case that the first response message includes the absolute location of the second terminal.

Optionally, the first sidelink measurement includes at least one of the following:
an angle between the second terminal and the first terminal; and
a distance between the second terminal and the first terminal.

The positioning processing apparatus of the embodiment sends the first request message to the first network side device, and receives the first response message corresponding to the first request message sent by the first network side device, and the first request message is used to request at least one of the following: the absolute location of the second terminal and the location of the first terminal. In this way, the first terminal can learn at least one of the absolute location of the second terminal and the location of the first terminal, to complete positioning.

The positioning processing apparatus in this embodiment of this application may be an electronic device, for example, an electronic device having an operating system, or may be a component in the electronic device, for example, an integrated circuit or a chip. The electronic device may be a terminal, or may be another device other than the terminal. In an example, the terminal may include but is not limited to the above listed types of the terminal 11, and another device may be a server, a network attached storage (Network Attached Storage, NAS), or the like. This is not specifically limited in embodiments of this application.

The positioning processing apparatus provided in this embodiment of this application can implement processes implemented in the method embodiments of FIG. 2 to FIG. 6, and achieve the same technical effects. To avoid repetition, details are not described herein again.

As shown in FIG. 8, a positioning processing method in this embodiment of this application includes the following steps:

Step 801: A first network side device receives a first request message sent by a first terminal.

Step 802: The first network side device sends a first response message to the first terminal, the first response message corresponding to the first request message, where
the first request message is used to request at least one of the following:
an absolute location of a second terminal, the second terminal being a positioning assistance device of the first terminal; and
a location of the first terminal.

Based on step 801 and step 802, the first network side device receives the first request message sent by the first terminal, and sends the first response message corresponding to the first request message to the first terminal, and the first request message is used to request at least one of the following: the absolute location of the second terminal and the location of the first terminal. In this way, the first terminal can learn at least one of the absolute location of the second terminal and the location of the first terminal, to complete positioning.

Optionally, the first request message includes at least one of the following:
an identifier of the first terminal;
an identifier of the second terminal;
a first sidelink measurement, where the first sidelink measurement is used to indicate a measurement between the first terminal and the second terminal;
a request type;
a first request indication; and
a measurement accuracy requirement.

Optionally, the request type includes at least one of the following:
a short time request; and
a long time request.

Optionally, the first request indication includes at least one of the following:
a first indication, used to indicate that the absolute location of the second terminal is to be obtained; and
a second indication, used to indicate that the location of the first terminal is to be obtained.

Optionally, the first response message includes at least one of the following:
the absolute location of the second terminal; and
the location of the first terminal.

Optionally, after the receiving, by a first network side device, a first request message sent by a first terminal, the method further includes:
performing, by the first network side device, authentication on the first terminal, where the authentication is used to determine whether the first terminal is allowed to obtain the absolute location of the second terminal;
sending, by the first network side device, a second request message to a second network side device in a case that the first terminal is allowed to obtain the absolute location of the second terminal; and
receiving, by the first network side device, a second response message sent by the second network side device, where
the second network side device supports calculation of the location of the first terminal; and
the second request message is used to request at least one of the following:
   the absolute location of the second terminal; and
   the location of the first terminal.

Optionally, the second request message includes at least one of the following:
an identifier of the first terminal;
an identifier of the second terminal;
a first sidelink measurement, where the first sidelink measurement is used to indicate a measurement between the first terminal and the second terminal;
a request type; and
a second request indication.

Optionally, the second response message includes at least one of the following:
the absolute location of the second terminal; and
the location of the first terminal.

Optionally, after the performing, by the first network side device, authentication on the first terminal, the method further includes:
sending, by the first network side device, a third response message to the first terminal in a case that the first terminal is not allowed to obtain the absolute location of the second terminal, where the third response message is used to indicate that the first request message is to be rejected.

It should be noted that, the method is implemented in conjunction with the foregoing positioning processing method performed by the first terminal. The implementation of the foregoing method embodiment is applicable to the method, and the same technical effect can also be achieved. Details are not described herein again.

The positioning processing method provided in embodiments of this application may be performed by a positioning processing apparatus. In embodiments of this application, the positioning processing apparatus provided in embodiments of this application is described by using an example in which the positioning processing apparatus performs the positioning processing method.

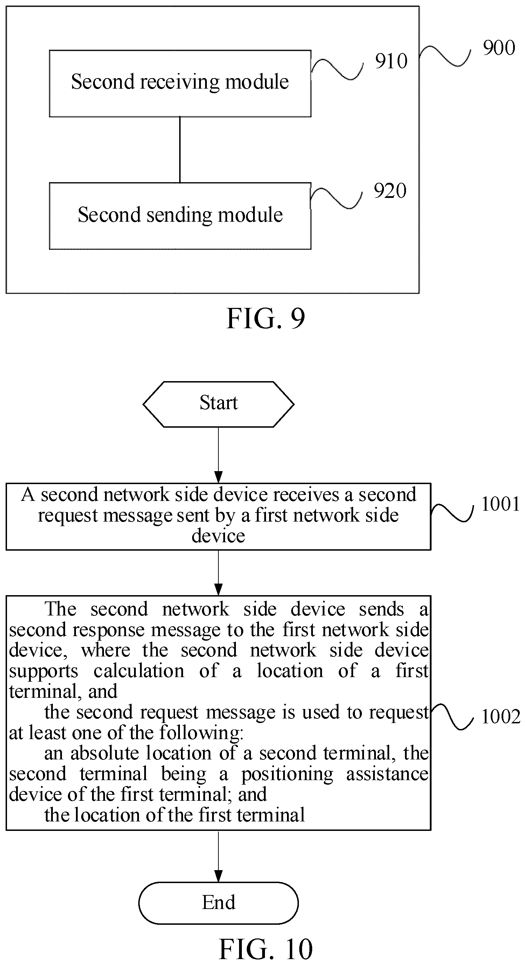

As shown in FIG. 9, a positioning processing apparatus 900 in this embodiment of this application includes:
a second receiving module 910, configured to receive a first request message sent by a first terminal; and
a second sending module 920, configured to send a first response message to the first terminal, the first response message corresponding to the first request message, where
the first request message is used to request at least one of the following:
   an absolute location of a second terminal, the second terminal being a positioning assistance device of the first terminal; and
   a location of the first terminal.

Optionally, the first request message includes at least one of the following:
an identifier of the first terminal;
an identifier of the second terminal;
a first sidelink measurement, where the first sidelink measurement is used to indicate a measurement between the first terminal and the second terminal;
a request type;
a first request indication; and
a measurement accuracy requirement.

Optionally, the request type includes at least one of the following:
a short time request; and
a long time request.

Optionally, the first request indication includes at least one of the following:
a first indication, used to indicate that the absolute location of the second terminal is to be obtained; and
a second indication, used to indicate that the location of the first terminal is to be obtained.

Optionally, the first response message includes at least one of the following:
the absolute location of the second terminal; and
the location of the first terminal.

Optionally, the apparatus further includes:
an authentication processing module, configured to perform authentication on the first terminal, where the authentication is used to determine whether the first terminal is allowed to obtain the absolute location of the second terminal;
a third sending module, configured to send a second request message to a second network side device in a case that the first terminal is allowed to obtain the absolute location of the second terminal; and
a third receiving module, configured to receive a second response message sent by the second network side device, where
the second network side device supports calculation of the location of the first terminal; and
the second request message is used to request at least one of the following:
   the absolute location of the second terminal; and
   the location of the first terminal.

Optionally, the second request message includes at least one of the following:
an identifier of the first terminal;
an identifier of the second terminal;
a first sidelink measurement, where the first sidelink measurement is used to indicate a measurement between the first terminal and the second terminal;
a request type; and
a second request indication.

Optionally, the second response message includes at least one of the following:
the absolute location of the second terminal; and
the location of the first terminal.

Optionally, the apparatus further includes:
a fourth sending module, configured to send a third response message to the first terminal in a case that the first terminal is not allowed to obtain the absolute location of the second terminal, where the third response message is used to indicate that the first request message is to be rejected.

The apparatus receives the first request message sent by the first terminal, and sends the first response message corresponding to the first request message to the first terminal, and the first request message is used to request at least one of the following: the absolute location of the second terminal and the location of the first terminal. In this way, the first terminal can learn at least one of the absolute location of the second terminal and the location of the first terminal, to complete positioning.

The positioning processing apparatus in this embodiment of this application may be an electronic device, for example, an electronic device having an operating system, or may be a component in the electronic device, for example, an integrated circuit or a chip. The electronic device may be a network side device, or may be another device other than the network side device. In an example, the terminal may include but is not limited to the above listed types of the network side device 12, and another device may be a server, a network attached storage (Network Attached Storage, NAS), or the like. This is not specifically limited in embodiments of this application.

The positioning processing apparatus provided in this embodiment of this application can implement processes implemented in the method embodiments of FIG. 3 to FIG. 6 and FIG. 8, and achieve the same technical effects. To avoid repetition, details are not described herein again.

As shown in FIG. 10, a positioning processing method in this embodiment of this application includes the following steps:

Step 1001: A second network side device receives a second request message sent by a first network side device.

Step 1002: The second network side device sends a second response message to the first network side device, where
the second network side device supports calculation of a location of a first terminal; and
the second request message is used to request at least one of the following:
   an absolute location of a second terminal, the second terminal being a positioning assistance device of the first terminal; and
   the location of the first terminal.

Based on step 1001 and step 1002, the second network side device receives the second request message, and sends the second response message corresponding to the second request message, and the second request message is used to request the location of the first terminal and/or the absolute location of the second terminal. In this way, the location of the first terminal and/or the absolute location of the second terminal is obtained through the second request message, thereby implementing network-assisted positioning.

Optionally, the second request message includes at least one of the following:
an identifier of the first terminal;
an identifier of the second terminal;
a first sidelink measurement, where the first sidelink measurement is used to indicate a measurement between the first terminal and the second terminal;
a request type;
a second request indication; and
a measurement accuracy requirement.

Optionally, the second response message includes at least one of the following:
the absolute location of the second terminal; and
the location of the first terminal.

Optionally, after the receiving, by a second network side device, a second request message sent by a first network side device, the method further includes:
performing, by the second network side device, positioning on the second terminal, to obtain absolute location information of the second terminal.

Optionally, after the obtaining, by the second network side device, absolute location information of the second terminal, the method further includes:
determining, by the second network side device, the location of the first terminal based on the first sidelink measurement and the absolute location information of the second terminal in a case that the second request message includes the first sidelink measurement.

It should be noted that, the method is implemented in conjunction with the foregoing positioning processing method performed by the first terminal and the first network side device. The implementation of the foregoing method embodiment is applicable to the method, and the same technical effect can also be achieved. Details are not described herein again.

The positioning processing method provided in embodiments of this application may be performed by a positioning processing apparatus. In embodiments of this application, the positioning processing apparatus provided in embodiments of this application is described by using an example in which the positioning processing apparatus performs the positioning processing method.

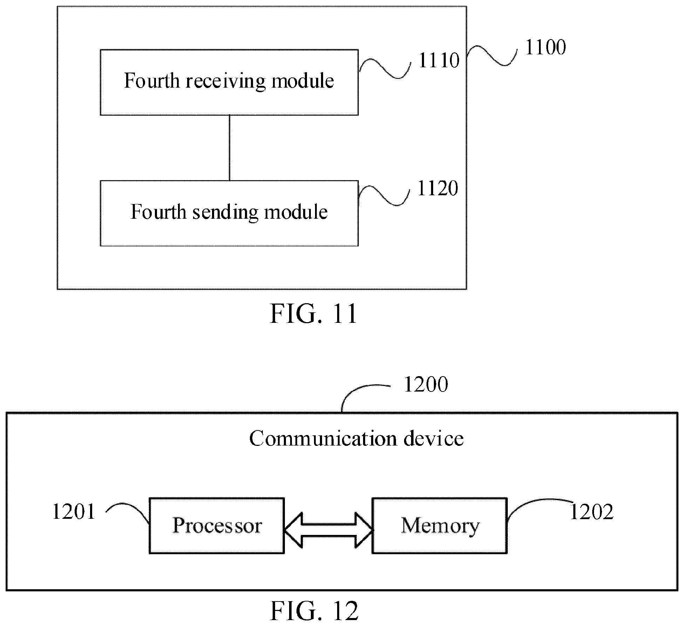

As shown in FIG. 11, a positioning processing apparatus 1100 in this embodiment of this application includes:
a fourth receiving module 1110, configured to receive a second request message sent by a first network side device; and
a fourth sending module 1120, configured to send a second response message to the first network side device, where
the second network side device supports calculation of a location of a first terminal; and
the second request message is used to request at least one of the following:
   an absolute location of a second terminal, the second terminal being a positioning assistance device of the first terminal; and
   the location of the first terminal.

Optionally, the second request message includes at least one of the following:
an identifier of the first terminal;
an identifier of the second terminal;
a first sidelink measurement, where the first sidelink measurement is used to indicate a measurement between the first terminal and the second terminal;
a request type;
a second request indication; and
a measurement accuracy requirement.

Optionally, the second response message includes at least one of the following:
the absolute location of the second terminal; and
the location of the first terminal.

Optionally, the apparatus further includes:
a second processing module, configured to perform positioning on the second terminal to obtain absolute location information of the second terminal.

Optionally, the apparatus further includes:
a second processing module, configured to determine the location of the first terminal based on the first sidelink measurement and the absolute location information of the second terminal in a case that the second request message includes the first sidelink measurement.

The apparatus receives the second request message, and sends the second response message corresponding to the second request message, and the second request message is used to request the location of the first terminal and/or the absolute location of the second terminal. In this way, the location of the first terminal and/or the absolute location of the second terminal is obtained through the second request message, thereby implementing network-assisted positioning.

The positioning processing apparatus in this embodiment of this application may be an electronic device, for example, an electronic device having an operating system, or may be a component in the electronic device, for example, an integrated circuit or a chip. The electronic device may be a network side device, or may be another device other than the network side device. In an example, the terminal may include but is not limited to the above listed types of the network side device 12, and another device may be a server, a network attached storage (Network Attached Storage, NAS), or the like. This is not specifically limited in embodiments of this application.

The positioning processing apparatus provided in this embodiment of this application can implement processes implemented in the method embodiments of FIG. 3 to FIG. 6 and FIG. 8, and achieve the same technical effects. To avoid repetition, details are not described herein again.

Optionally, as shown in FIG. 12, an embodiment of this application further provides a communication device 1200, including a processor 1201 and a memory 1202. The memory 1202 has a program or instructions executable in the processor 1201 stored therein. For example, when the communication device 1200 is a first terminal, the program or the instructions, when executed by the processor 1201, implement the steps of the above embodiments of the positioning processing method, and can achieve the same technical effects. When the communication device 1200 is a first network side device, the program or the instructions, when executed by the processor 1201, implement the steps of the above embodiments of the positioning processing method, and can achieve the same technical effects. To avoid repetition, details are not described herein. When the communication device 1200 is a second network side device, the program or the instructions, when executed by the processor 1201, implement the steps of the above embodiments of the positioning processing method, and can achieve the same technical effects. To avoid repetition, details are not described herein.

An embodiment of this application further provides a terminal, including a processor and a communication interface. The communication interface is configured to: send a first request message to a first network side device; receive a first response message sent by the first network side device, the first response message corresponding to the first request message, where
the first request message is used to request at least one of the following:
an absolute location of a second terminal, the second terminal being a positioning assistance device of the first terminal; and
a location of the first terminal.

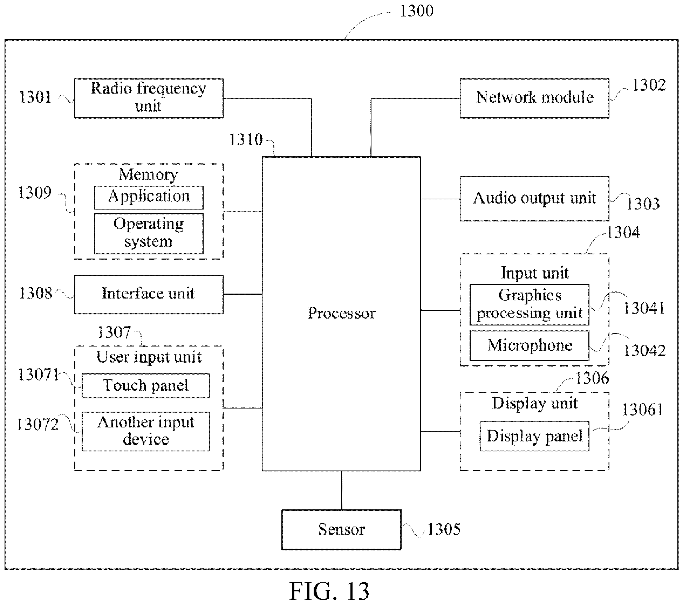

The terminal embodiment corresponds to the above method embodiment performed by the first terminal. The implementation processes and implementations of the above method embodiments are all applicable to the terminal embodiment, and can achieve the same technical effects. Specifically, FIG. 13 is a schematic diagram of a hardware structure of a terminal for implementing an embodiment of this application.

The terminal 1300 includes but is not limited to at least some of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the terminal 1300 may further include a power supply (such as a battery) that supplies power to the components. The power supply may be logically connected to the processor 1310 through a power management system, thereby implementing functions such as management of charging, discharging, and power consumption through the power management system. The terminal structure shown in FIG. 13 constitutes no limitation on the terminal, and the terminal may include more or fewer components than those shown in the figure, or some merged components, or different component arrangements. Details are not described herein again.

It should be noted that, in this embodiment of this application, the input unit 1304 may include a graphics processing unit (Graphics Processing Unit, GPU) 13041 and a microphone 13042. The graphics processing unit 13041 processes image data of a static picture or a video obtained by an image capturing apparatus (for example, a camera) in a video capturing mode or an image capturing mode. The display unit 1306 may include a display panel 13061. The display panel 13061 may be configured in a form such as a liquid crystal display or an organic light-emitting diode. The user input unit 1307 includes at least one of a touch panel 13071 and another input device 13072. The touch panel 13071 is also referred to as a touch screen. The touch panel 13071 may include two parts: a touch detection apparatus and a touch controller. Another input device 13072 may include but is not limited to a physical keyboard, a function button (such as a volume control button or a switch button), a trackball, a mouse, and a joystick. Details are not described herein again.

In this embodiment of this application, the radio frequency unit 1301 receives downlink data from a network side device, and then may transmit the data to the processor 1310 for processing. In addition, the radio frequency unit 1301 may send uplink data to the network side device. Generally, the radio frequency unit 1301 includes but is not limited to an antenna, an amplifier, a transceiver, a coupler, a low noise amplifier, a duplexer, and the like.

The memory 1309 may be configured to store a software program or an instruction and various data. The memory 1309 may mainly include a first storage area for storing the program or the instruction and a second storage area for storing data. The first storage area may store an operating system, an application or an instruction required for at least one function (such as a sound playback function or an image playback function), and the like. In addition, the memory 1309 may include a volatile memory or a non-volatile memory, or the memory 1309 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1309 in this embodiment of this application includes but is not limited to the above and any other suitable types of memories.

The processor 1310 may include one or more processing units. Optionally, the processor 1310 integrates an application processor and a modem processor. The application processor mainly processes operations related to an operating system, a user interface, an application, and the like. The modem processor mainly processes a wireless communication signal, for example, may be a baseband processor. It may be understood that the modem processor may alternatively not be integrated into the processor 1310.

The radio frequency unit 1301 is configured to: send a first request message to a first network side device; and receive a first response message sent by the first network side device, the first response message corresponding to the first request message, where
the first request message is used to request at least one of the following:
an absolute location of a second terminal, the second terminal being a positioning assistance device of the first terminal; and
a location of the first terminal.

The terminal sends the first request message to the first network side device, and receives the first response message corresponding to the first request message sent by the first network side device, and the first request message is used to request at least one of the following: the absolute location of the second terminal and the location of the first terminal. In this way, the first terminal can learn at least one of the absolute location of the second terminal and the location of the first terminal, to complete positioning.

Optionally, the first request message includes at least one of the following:
an identifier of the first terminal;
an identifier of the second terminal;
a first sidelink measurement, where the first sidelink measurement is used to indicate a measurement between the first terminal and the second terminal;
a request type;
a first request indication; and
a measurement accuracy requirement.

Optionally, the request type includes at least one of the following:
a short time request; and
a long time request.

Optionally, the first request indication includes at least one of the following:
a first indication, used to indicate that the absolute location of the second terminal is to be obtained; and
a second indication, used to indicate that the location of the first terminal is to be obtained.

Optionally, the first response message includes at least one of the following:
the absolute location of the second terminal; and
the location of the first terminal.

Optionally, the absolute location of the second terminal and/or the location of the first terminal is obtained and sent to the first terminal by the first network side device in a case that it is determined that the first terminal is allowed to obtain the absolute location of the second terminal.

Optionally, the location of the first terminal is determined by a second network side device based on the absolute location of the second terminal and the first sidelink measurement.

The absolute location of the second terminal is obtained by the second network side device by performing positioning on the second terminal.

The second network side device supports calculation of the location of the first terminal.

Optionally, the processor 1310 is configured to:
determine the location of the first terminal based on the absolute location of the second terminal and the first sidelink measurement in a case that the first response message includes the absolute location of the second terminal.

Optionally, the first sidelink measurement includes at least one of the following:
an angle between the second terminal and the first terminal; and
a distance between the second terminal and the first terminal.

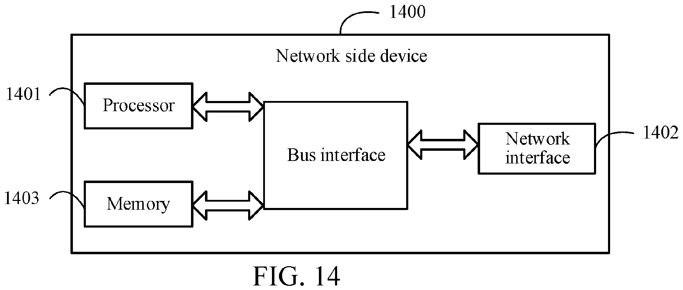

An embodiment of this application further provides a network side device. As shown in FIG. 14, the network side device 1400 includes a processor 1401, a network interface 1402, and a memory 1403. The network interface 1402 is, for example, a common public radio interface (common public radio interface, CPRI).

Specifically, the network side device 1400 in this embodiment of this application further includes instructions or a program stored in the memory 1403 and executable by the processor 1401. The processor 1401 invokes the instructions or the program in the memory 1403 to perform the method performed by each module shown in FIG. 9 or FIG. 11, and achieves the same technical effects. To avoid repetition, details are not described herein.

An embodiment of this application further provides a readable storage medium. The readable storage medium stores a program or an instruction. The program or the instruction, when executed by a processor, implements the processes of the above positioning processing method embodiment, and can achieve the same technical effects. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or an instruction, to implement the processes of the above positioning processing method embodiment, and can achieve the same technical effects. To avoid repetition, details are not described herein again.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the foregoing positioning processing method embodiment, and can achieve the same technical effects. To avoid repetition, details are not described herein again.

An embodiment of this application further provides a positioning processing system, including a terminal and a network side device. The terminal may be configured to implement the above steps of the positioning processing method performed by the first terminal. The network side device may be configured to implement the above steps of the positioning processing method performed by the first network side device or the second network side device.

It should be noted that, a term "include", "comprise", or any other variant thereof herein is intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by a phrase "include one ..." does not exclude existence of an additional same element in the process, the method, the article, or the apparatus that includes the element. In addition, it should be noted that the scope of the method and the apparatus in embodiments of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the above implementations, a person skilled in the art may clearly learn that the method in the above embodiments may be implemented by software with a necessary universal hardware platform, or may be implemented by hardware. However, in many cases, the software with the universal hardware platform is a preferred implementation. Based on such an understanding, the technical solution of this application, in essence, or a part contributing to the prior art may be embodied in a form of a computer software product. The computer software product is stored in a storage medium (such as a ROM/RAM, a magnetic disk, or an optical disk), including several instructions for causing a terminal (such as a mobile phone, a computer, a server, an air conditioner, or a network device) to perform the method in embodiments of this application.

Although embodiments of this application are described above with reference to the accompanying drawings, this application is not limited to the specific implementations described above. The above specific implementations are merely illustrative but not restrictive. With the enlightenment of this application, a person of ordinary skill in the art may make many forms without departing from the objective of this application and the protection scope of the claims. These forms fall within the protection scope of this application.

## Claims

1. A positioning processing method, comprising:
sending, by a first terminal, a first request message to a first network side device; and
receiving, by the first terminal, a first response message sent by the first network side device, the first response message corresponding to the first request message, wherein
the first request message is used to request at least one of the following:
an absolute location of a second terminal, the second terminal being a positioning assistance device of the first terminal; and
a location of the first terminal.

2. The method according to claim 1, wherein the first request message comprises at least one of the following:
an identifier of the first terminal;
an identifier of the second terminal;
a first sidelink measurement, wherein the first sidelink measurement is used to indicate a measurement between the first terminal and the second terminal;
a request type;
a first request indication; and
a measurement accuracy requirement.

3. The method according to claim 2, wherein the request type comprises at least one of the following:
a short time request; and
a long time request.

4. The method according to claim 2, wherein the first request indication comprises at least one of the following:
a first indication, used to indicate that the absolute location of the second terminal is to be obtained; and
a second indication, used to indicate that the location of the first terminal is to be obtained.

5. The method according to claim 1, wherein the first response message comprises at least one of the following:
the absolute location of the second terminal; and
the location of the first terminal.

6. The method according to claim 5, wherein the absolute location of the second terminal and/or the location of the first terminal is obtained and sent to the first terminal by the first network side device in a case that it is determined that the first terminal is allowed to obtain the absolute location of the second terminal.

7. The method according to claim 6, wherein the location of the first terminal is determined by a second network side device based on the absolute location of the second terminal and a first sidelink measurement;
the absolute location of the second terminal is obtained by the second network side device by performing positioning on the second terminal; and
the second network side device supports calculation of the location of the first terminal.

8. The method according to claim 5, wherein after the receiving, by the first terminal, a first response message sent by the first network side device, the method further comprises:
determining, by the first terminal, the location of the first terminal based on the absolute location of the second terminal and the first sidelink measurement in a case that the first response message comprises the absolute location of the second terminal.

9. The method according to claim 2 or 7 or 8, wherein the first sidelink measurement comprises at least one of the following:
an angle between the second terminal and the first terminal; and
a distance between the second terminal and the first terminal.

10. A positioning processing method, comprising:
receiving, by a first network side device, a first request message sent by a first terminal; and
sending, by the first network side device, a first response message to the first terminal, the first response message corresponding to the first request message, wherein
the first request message is used to request at least one of the following:
an absolute location of a second terminal, the second terminal being a positioning assistance device of the first terminal; and
a location of the first terminal.

11. The method according to claim 10, wherein the first request message comprises at least one of the following:
an identifier of the first terminal;
an identifier of the second terminal;
a first sidelink measurement, wherein the first sidelink measurement is used to indicate a measurement between the first terminal and the second terminal;
a request type;
a first request indication; and
a measurement accuracy requirement.

12. The method according to claim 10, wherein the first response message comprises at least one of the following:
the absolute location of the second terminal; and
the location of the first terminal.

13. The method according to claim 10, wherein after the receiving, by a first network side device, a first request message sent by a first terminal, the method further comprises:
performing, by the first network side device, authentication on the first terminal, wherein the authentication is used to determine whether the first terminal is allowed to obtain the absolute location of the second terminal;
sending, by the first network side device, a second request message to a second network side device in a case that the first terminal is allowed to obtain the absolute location of the second terminal; and
receiving, by the first network side device, a second response message sent by the second network side device, wherein
the second network side device supports calculation of the location of the first terminal; and
the second request message is used to request at least one of the following:
the absolute location of the second terminal; and
the location of the first terminal.

14. The method according to claim 13, wherein the second request message comprises at least one of the following:
an identifier of the first terminal;
an identifier of the second terminal;
a first sidelink measurement, wherein the first sidelink measurement is used to indicate a measurement between the first terminal and the second terminal;
a request type; and
a second request indication.

15. The method according to claim 13, wherein the second response message comprises at least one of the following:
the absolute location of the second terminal; and
the location of the first terminal.

16. The method according to claim 13, wherein after the performing, by the first network side device, authentication on the first terminal, the method further comprises:
sending, by the first network side device, a third response message to the first terminal in a case that the first terminal is not allowed to obtain the absolute location of the second terminal, wherein the third response message is used to indicate that the first request message is to be rejected.

17. A positioning processing method, comprising:
receiving, by a second network side device, a second request message sent by a first network side device; and
sending, by the second network side device, a second response message to the first network side device, wherein
the second network side device supports calculation of a location of a first terminal; and
the second request message is used to request at least one of the following:
an absolute location of a second terminal, the second terminal being a positioning assistance device of the first terminal; and
the location of the first terminal.

18. The method according to claim 17, wherein the second request message comprises at least one of the following:
an identifier of the first terminal;
an identifier of the second terminal;
a first sidelink measurement, wherein the first sidelink measurement is used to indicate a measurement between the first terminal and the second terminal;
a request type;
a second request indication; and
a measurement accuracy requirement.

19. The method according to claim 17, wherein the second response message comprises at least one of the following:
the absolute location of the second terminal; and
the location of the first terminal.

20. The method according to claim 17, wherein after the receiving, by a second network side device, a second request message sent by a first network side device, the method further comprises:
performing, by the second network side device, positioning on the second terminal, to obtain absolute location information of the second terminal.

21. The method according to claim 20, wherein after the obtaining, by the second network side device, absolute location information of the second terminal, the method further comprises:
determining, by the second network side device, the location of the first terminal based on the first sidelink measurement and the absolute location information of the second terminal in a case that the second request message comprises the first sidelink measurement.

22. A positioning processing apparatus, comprising:
a first sending module, configured to send a first request message to a first network side device; and
a first receiving module, configured to receive a first response message sent by the first network side device, the first response message corresponding to the first request message, wherein
the first request message is used to request at least one of the following:
an absolute location of a second terminal, the second terminal being a positioning assistance device of the first terminal; and
a location of the first terminal.

23. The apparatus according to claim 22, wherein the first request message comprises at least one of the following:
an identifier of the first terminal;
an identifier of the second terminal;
a first sidelink measurement, wherein the first sidelink measurement is used to indicate a measurement between the first terminal and the second terminal;
a request type;
a first request indication; and
a measurement accuracy requirement.

24. The apparatus according to claim 22, wherein the first response message comprises at least one of the following:
the absolute location of the second terminal; and
the location of the first terminal.

25. A positioning processing apparatus, comprising:
a second receiving module, configured to receive a first request message sent by a first terminal; and
a second sending module, configured to send a first response message to the first terminal, the first response message corresponding to the first request message, wherein
the first request message is used to request at least one of the following:
an absolute location of a second terminal, the second terminal being a positioning assistance device of the first terminal; and
a location of the first terminal.

26. The apparatus according to claim 25, further comprising:
an authentication processing module, configured to perform authentication on the first terminal, wherein the authentication is used to determine whether the first terminal is allowed to obtain the absolute location of the second terminal;
a third sending module, configured to send a second request message to a second network side device in a case that the first terminal is allowed to obtain the absolute location of the second terminal; and
a third receiving module, configured to receive a second response message sent by the second network side device, wherein
the second network side device supports calculation of the location of the first terminal; and
the second request message is used to request at least one of the following:
the absolute location of the second terminal; and
the location of the first terminal.

27. The apparatus according to claim 26, wherein the second request message comprises at least one of the following:
an identifier of the first terminal;
an identifier of the second terminal;
a first sidelink measurement, wherein the first sidelink measurement is used to indicate a measurement between the first terminal and the second terminal;
a request type; and
a second request indication.

28. The apparatus according to claim 26, wherein the second response message comprises at least one of the following:
the absolute location of the second terminal; and
the location of the first terminal.

29. A positioning processing apparatus, comprising:
a fourth receiving module, configured to receive a second request message sent by a first network side device; and
a fourth sending module, configured to send a second response message to the first network side device, wherein
the second network side device supports calculation of a location of a first terminal; and
the second request message is used to request at least one of the following:
an absolute location of a second terminal, the second terminal being a positioning assistance device of the first terminal; and
the location of the first terminal.

30. A terminal, comprising a memory and a processor, wherein the memory stores a program or an instruction executable in the processor, and the program or the instruction, when executed by the processor, implements the steps of the positioning processing method according to any one of claims 1 to 9.

31. A network side device, comprising a memory and a processor, wherein the memory stores a program or an instruction executable in the processor, and the program or the instruction, when executed by the processor, implements the steps of the positioning processing method according to any one of claims 10 to 16.

32. A network side device, comprising a memory and a processor, wherein the memory stores a program or an instruction executable in the processor, and the program or the instruction, when executed by the processor, implements the steps of the positioning processing method according to any one of claims 17 to 21.

33. A readable storage medium, storing a program or an instruction, wherein the program or the instruction, when executed by a processor, implements the steps of the positioning processing method according to any one of claims 1 to 9, or implements the steps of the positioning processing method according to any one of claims 10 to 16, or implements the steps of the positioning processing method according to any one of claims 17 to 21.
